# DEMANDE DE BREVET EUROPEEN

(11) **EP 1 772 685 A2**
(43) Date de publication de la demande: **11.04.2007**
(21) Numéro de dépôt: 06370026.4
(22) Date de dépôt: 12.09.2006
(51) Int. Cl.: F24J 3/08

(54) **Dispositif de contrôle-commande permettant la gestion des transferts de chaleur pour améliorer ou adapter la récupération de chaleur géothermique du sol dans un système de pompe à chaleur**

(30) Priorité: 02.10.2005 FR 0510055
(71) Demandeur: Place, Bernard, Berlencourt le Cauroy 62810 (FR)
(72) Inventeur: Place, Bernard, Berlencourt le Cauroy 62810 (FR)

(57) **Abrégé**

L'invention se caractérise par l'échange géothermique adapté, grâce au couplage thermique de deux canalisations contiguës enterrées, constituant un échangeur thermique où l'évaporateur de la pompe à chaleur est inclus. Le pilotage de l'inversion des flux de circulation permet d'éviter la prise en glace du sol, néfaste pour l'échange thermique.

L'invention comprend un réseau de deux canalisations contiguës enterrées. L'une transporte un fluide thermique type solution antigel(1) l'autre servant d'évaporateur (2) pour la pompe à chaleur(3) Un dispositif (6)piloté par un capteur de température (7) effectue l'inversion du mode de fonctionnement « courants parallèles (antiméthodique) ou contre courants (méthodique) »dé l'échangeur constitué.

## Description

La présente invention concerne un dispositif pour améliorer la récupération de l'énergie géothermique dans un système de pompe à chaleur.

La récupération de l'énergie géothermique dans le sol se fait par une seule boucle de circulation d'un fluide thermique à une profondeur donnée par rapport à la surface du sol, par exemple 0,6 mètre. Cette boucle comporte ou non un échangeur thermique en interface avec la pompe à chaleur. Ce dispositif peut occasionner une prise en glace du sol, ce qui réduit l'échange thermique et apporte des contraintes conséquentes à l'implantation.

Le dispositif selon la présente invention permet en réalisant un échangeur enterré en interface, d'assurer la gestion de l'énergie géothermique récupérée en rapport avec le régime de puissance de la pompe à chaleur. Dans certain cas cela peut permettre en s'adaptant mieux au exigence de la thermodynamique de réduire la longueur de boucle nécessaire au bon fonctionnement de l'installation. Ce dispositif constitué de deux circuits de fluide thermique couplé thermiquement dans une même gaine enterrée, sert à la fois d'échangeur thermique d'interface avec la pompe à chaleur et de régleur des températures du sol environnant aux différentes zones de la boucle géothermique. En effet par une meilleure maîtrise du point de gel, il devient possible de récupérer avec un meilleur rendement la chaleur latente de glaciation (chaleur latente de fusion de la glace qui selon certaines tables de calculs vaut 79 k.cal). De plus la présente invention permet un fonctionnement simplifié à un seul circuit pendant l'intersaison ou la pleine puissance de l'installation ne serait pas requise. Selon une réalisation possible l'installation comprend, à l'intérieur d'un même conduit enterré, un tube de cuivre utilisé en circuit évaporateur de la pompe à chaleur, cheminant avec un tube chargé en solution antigel permettant de ne pas geler à la température de fonctionnement. Le circuit de solution antigel en circulant dans un sens approprié produit un transfert thermique des endroits plus chauds du sol vers les endroits plus froids en évitant la prise en glace solide du sol

Dans certains cas selon la constitution du sol, il se peut que la boucle de solution antigel soit plus longue que la canalisation de cuivre du circuit de l'évaporateur dans le but de favoriser le transfert de l'énergie géothermique pour une meilleure adaptation. Un procédé permet le changement de sens de circulation relatif des deux fluides pour adapter la récupération de chaleur en fonction de la température des zones parcourues. Une mesure de température est effectuée par un capteur placé dans la zone médiane de la boucle géothermique permet de déterminer le sens de circulation relatif du fluide thermique.
Selon une première réalisation , une vanne à quatre voies placée en interface avec la pompe à chaleur, et pilotée par le système de réglage, inverse le sens de circulation du flux de fluide frigorigène dans le circuit enterré de l'évaporateur. Une autre façon de procéder permet aussi d'obtenir un empêchement de la glaciation, en inversant le flux dans la canalisation de solution antigel couplée au circuit secondaire de l'échangeur enterré ainsi constitué. Dans ce cas soit un couplage tête-bêche de deux pompe de circulation, opère l'inversion du flux.
Les dessins en annexes illustrent l'invention :
La figure une, représente schématiquement une pompe à chaleur (3) munie de son évaporateur (2) enterré, couplé thermiquement dans le sol à une canalisation secondaire (1) d'eau glycolée, munie de son vase d'expansion sous pression d'azote (5) et de sa pompe de circulation (4). La vanne à quatre voies (6) placée entre la pompe à chaleur et l'évaporateur est pilotée par un système de réglage informé par le capteur de température (7) situé en zone géothermique médiane.
La figure deux : représente schématiquement une pompe à chaleur (3) munie de son évaporateur (2) enterré, couplé thermiquement dans le sol à une canalisation secondaire (1) d'eau glycolée, munie de son vase d'expansion sous pression d'azote (5) et de sa pompe de circulation (4), la zone enterrée de la canalisation secondaire est plus longue que la zone enterrée de l'évaporateur pour permettre une bonne adaptation du système aux contraintes géologiques. L'inversion de flux de l'échange thermique se fait alors sur la canalisation enterrée la plus longue par la vanne à quatre voies (6).
Les figures trois et quatre : schématisent un système de reprise de l'accumulation dans le sol d'une énergie associée tel que peut l'être l'énergie solaire ou autre tel que la décomposition de déchets (biomasse) ou encore l'électricité éolienne ... .

## Revendications

1. Le dispositif permettant de gérer l'échange géothermique d'un système récupérateur de chaleur de surface du sol, **caractérisé par** l'échangeur basse température, constitué par les éléments repaire (1) et (2) d'interface avec le récupérateur qui sont intégrés dans la canalisation enterrée de la boucle géothermique.

2. Dispositif selon la revendication
(1) **caractérisé par** la boucle géothermique secondaire (1) de la gestion d'énergie qui peut être plus longue pour adapter la récupération d'énergie géothermique à la nature ou la configuration du terrain où elle est implantée fig (2)

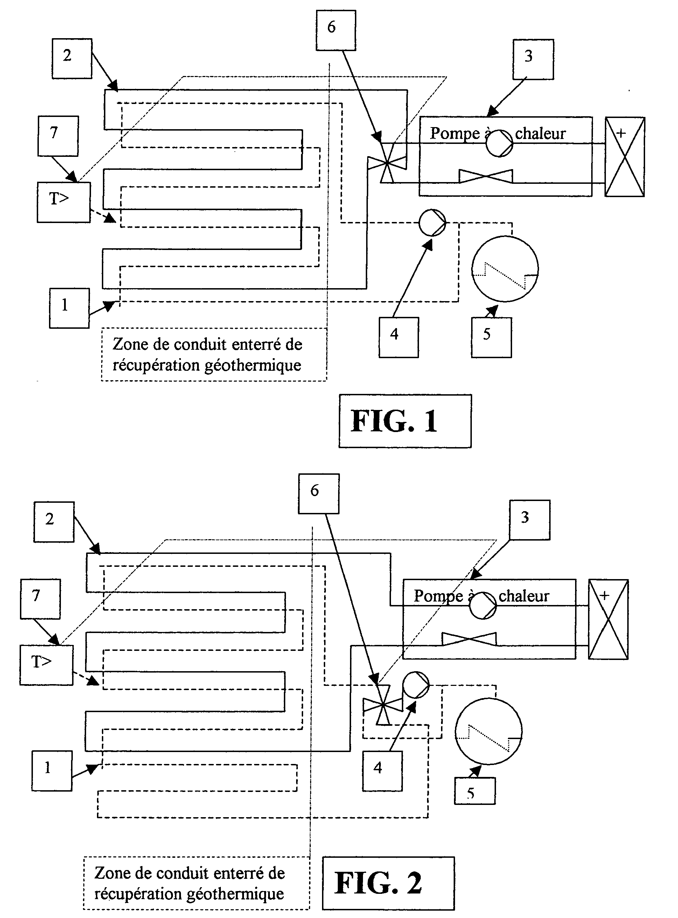

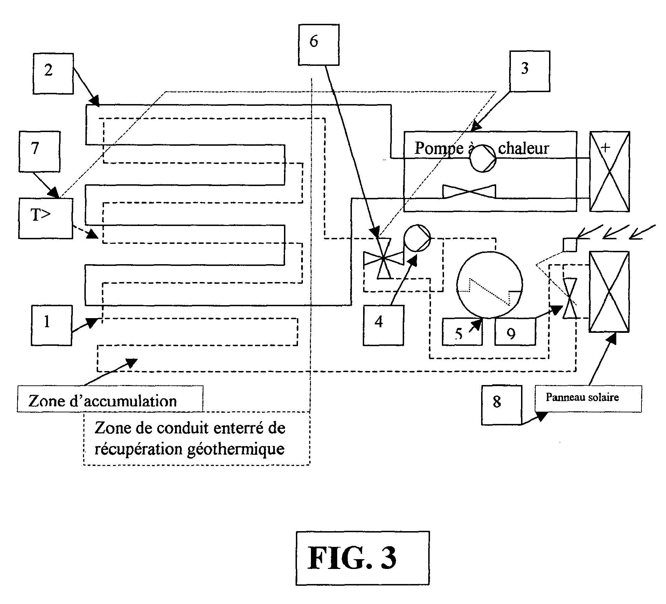

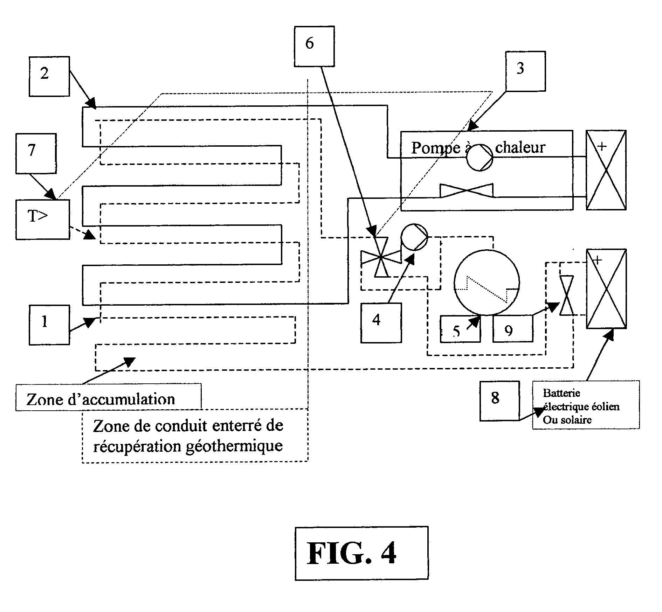

3. Dispositif selon les revendications (1) et (2) où la boucle secondaire (1) sert à accumuler dans le sol l'énergie récupérée par ailleurs soit par exemple un chauffe eau solaire (8) figure 3 ou bien encore l'énergie produit par la fermentation de déchets organiques ou bien alors les deux ensemble, ou même encore l'accumulation dans le sol de l'énergie électrique éolien ou solaire par effet joule

4. Dispositif selon les revendications précédentes où l'inversion du flux relatif dans les conduites enterrées (1) et (2) permet en moyennant les échanges d'éviter la glaciation du sol, où un élément d'inversion de sens relatif d'écoulement (6) permet à l'échangeur enterré un fonctionnement à courants parallèles (anti-méthodique) ou à contre-courant (méthodique). Un capteur de température (7) placé dans la zone médiane de l'échange, pilote le système d'inversion.

5. Dispositif selon les revendications précédentes **caractérisé par** son fonctionnement en récupération géothermique directement dans le circuit de l'évaporateur, sans circulation dans le circuit enterré (1) en fonctionnement de puissance limitée suivant les conditions climatiques ou fonctionnement en mode dégradé.
